# FASCICULE DE BREVET EUROPEEN

(11) **EP 2 262 686 B1**
(45) Date de publication et mention de la délivrance du brevet: **21.09.2011**
(21) Numéro de dépôt: 09742260.4
(22) Date de dépôt: 07.04.2009
(51) Int. Cl.: B64D 33/02

(54) **PANNEAU POUR LE TRAITEMENT ACOUSTIQUE INTEGRANT UN RENFORT DE LIAISON**
SCHALLBEHANDLUNGSPLATTE MIT INTEGRIERTER VERBINDUNGSVERSTÄRKUNG
ACOUSTIC TREATMENT PANEL WITH INTEGRAL CONNECTING REINFORCEMENT

(30) Priorité: 10.04.2008 FR 0852410
(43) Date de publication de la demande: 22.12.2010
(73) Titulaire: Airbus Opérations SAS, 31060 Toulouse (FR)
(72) Inventeur: PORTE, Alain, F-31770 Colomiers (FR); LALANE, Jacques, F-31650 Saint Orens De Gameville (FR)
(74) Mandataire: Fantin, Laurent
(86) Numéro de dépôt international: PCT/FR2009/050597
(87) Numéro de publication internationale: WO 2009/136062

(56) Documents cités:
- FR-A- 2 887 519
- US-A1- 2002 179 773

## Description

La présente invention se rapporte à un panneau pour le traitement acoustique intégrant un renfort pour assurer une liaison avec au moins un autre panneau, visant à réduire la surface non traitée sur le plan acoustique d'une entrée d'air d'une nacelle.

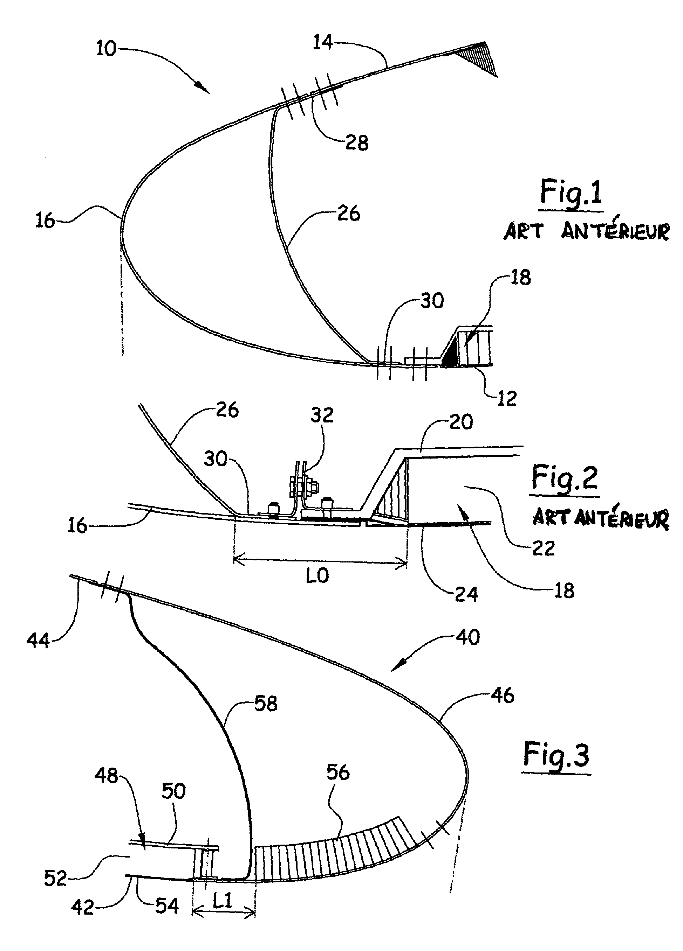

Selon un mode de réalisation de l'art antérieur, illustré sur la figure 1, une nacelle 10 comprend au moins un conduit 12, une paroi périphérique 14, et à l'avant, une entrée d'air délimitée par une lèvre 16 qui relie le conduit 12 et la paroi périphérique 14.

De manière connue, le conduit 12 comporte un revêtement ou panneau 18 pour le traitement acoustique comprenant de l'intérieur vers l'extérieur, une couche réflectrice 20, au moins une structure alvéolaire 22 et au moins une structure acoustiquement résistive 24 formant la surface aérodynamique du conduit 12. Avantageusement, la lèvre 16 peut comprendre également un revêtement pour le traitement acoustique.

Pour renforcer la structure de la nacelle, un cadre avant 26 relie le conduit 12 et la paroi périphérique 14, la lèvre 16 étant solidarisée audit cadre avant 26. Selon un mode de réalisation, pour assurer la liaison entre le panneau formant la lèvre 16 et le panneau formant la paroi périphérique 14, les bords desdits panneaux sont plaqués puis fixés par tous moyens appropriés contre un rebord 28 du cadre avant 26.

Selon un mode de réalisation de l'art antérieur, illustré en détails sur la figure 2, au niveau de la zone de jonction du conduit 12 et de la lèvre 16, le cadre avant 26 comprend un rebord 30 contre lequel est plaquée la paroi formant la lèvre 16. A ce niveau, la couche réflectrice 20 et la structure acoustiquement résistive 24 ont des dimensions supérieures à celles de la structure alvéolaire 22 afin d'être convergentes puis plaquées l'une contre l'autre et fixées contre la surface intérieure de la lèvre qui s'étend au-delà du rebord 30. En complément, un renfort 32 est prévu pour assurer la liaison entre d'une part les deux couches accolées 22 et 24 et d'autre part le cadre avant.

Cette configuration n'est pas satisfaisante pour les raisons suivantes :

Les efforts passant par la couche réflectrice et par la structure acoustiquement résistive n'étant équilibrés, cela génère un problème de dépliage au niveau de la zone de jonction avec la lèvre et de délaminage, les différentes parties du revêtement étant en matériaux composites pour des raisons de gain de masse.

Selon un autre inconvénient, la zone terminale du revêtement acoustique au niveau de laquelle la couche réflectrice et la structure acoustiquement résistive sont convergentes n'est pas traitée sur le plan acoustique. Par conséquent, cette zone se cumule avec les zone de superposition d'une part de la lèvre et du cadre avant, et d'autre part, de la lèvre et des deux couches accolées 22 et 24 ce qui conduit à une zone LO non traitée sur le plan acoustique importante.

Un panneau pour le traitement acoustique d'une entrée d'air d'une nacelle avec toutes les caractéristiques du préambule des revendications 1 et 4, est connu de US 2002/179773.

Aussi, la présente invention vise à pallier aux inconvénients de l'art antérieur en proposant un panneau pour le traitement acoustique amélioré permettant de réduire la zone non traitée sur le plan acoustique et assurant une meilleure reprise des efforts entre les différentes couches dudit panneau au niveau d'une zone de jonction avec un autre panneau.

A cet effet, l'invention, telle que définie par les caractéristiques des revendications indépendantes 1 et 4, a pour objet un panneau pour le traitement acoustique comprenant, de l'intérieur vers l'extérieur, une couche réflectrice, au moins une structure alvéolaire et au moins une structure acoustiquement résistive formant une surface aérodynamique, ledit panneau étant relié au niveau d'un bord à au moins un second panneau, caractérisé en ce qu'il comprend, au niveau du bord chevauchant avec ledit au moins un second panneau, un renfort intercalé entre la couche réflectrice et la structure acoustiquement résistive formant la surface aérodynamique, ledit renfort assurant la reprise des efforts entre ladite couche et ladite structure.

D'autres caractéristiques et avantages ressortiront de la description qui va suivre de l'invention, description donnée à titre d'exemple uniquement, en regard des dessins annexés sur lesquels :
- la figure 1 est une coupe illustrant la partie avant supérieure d'une nacelle selon l'art antérieur,
- la figure 2 est une coupe illustrant en détails la zone de jonction entre une lèvre, un cadre avant et un conduit de la nacelle de la figure 1,
- la figure 3 est une coupe illustrant la partie avant supérieure d'une nacelle selon l'invention,
- la figure 4 est une coupe illustrant en détails la zone de jonction entre une lèvre, un cadre avant et un conduit de la nacelle de la figure 3,
- la figure 5 est une vue en perspective d'un renfort de panneau acoustique selon l'invention, et
- la figure 6 est une vue illustrant un mode de réalisation d'un dispositif de renfort selon l'invention.

Sur la figure 3, on a représenté la partie avant supérieure d'une nacelle 40.

De manière connue, elle comprend au moins un conduit 42, une paroi périphérique 44, et à l'avant, une entrée d'air délimitée par une lèvre 46 qui relie le conduit 42 et la paroi périphérique 44.

Le conduit 42 comporte un revêtement ou panneau 48 pour le traitement acoustique comprenant de l'intérieur vers l'extérieur, une couche réflectrice 50, au moins une structure alvéolaire 52 et au moins une structure acoustiquement résistive 54 formant la surface aérodynamique du conduit 52. Avantageusement, la lèvre 46 comprend également un revêtement 56 pour le traitement acoustique.

Pour renforcer la structure de la nacelle, un cadre avant 58 relie le conduit 42, la paroi périphérique 44 et la lèvre 46.

La liaison entre le panneau formant la lèvre 46, le panneau formant la paroi périphérique 44 et le cadre avant 58 n'est pas détaillée.

La présente invention se rapporte plus particulièrement à la zone de jonction entre le cadre avant 58, le panneau formant la lèvre 46 et le panneau formant le conduit 42. Au niveau de cette zone, un bord du panneau 48 pour le traitement acoustique est solidarisé à au moins un autre panneau, celui formant la lèvre et/ou celui formant le cadre avant 58, ledit au moins un panneau étant plaqué contre au moins une surface dudit panneau acoustique.

Selon l'invention, le panneau acoustique 48 comprend au niveau du bord chevauchant avec au moins un autre panneau un renfort 60 intercalé entre la couche réflectrice 50 et la structure acoustiquement résistive 54 formant la surface aérodynamique du conduit 42 et assurant la reprise des efforts entre les deux couches 50 et 54.

Ce renfort 60 se présente sous la forme d'un profilé comprenant une première partie 62 offrant une surface de contact à la surface intérieure de la couche réflectrice 50 et une seconde partie 64 offrant une surface de contact à la surface intérieure de la structure acoustiquement résistive 54 et au moins une paroi 66 assurant la liaison et la reprise des efforts entre les parties 62 et 64. Avantageusement, la paroi 66 permet d'assurer l'étanchéité de la zone entre la couche réflectrice 50 et la structure acoustiquement résistive 54 en bout de panneau.

Les surfaces de contact des parties 62 et 64 sont sensiblement parallèles et espacées d'une distance correspondant sensiblement à l'écart entre la couche réflectrice 50 et la structure acoustiquement résistive 54 lorsque lesdites couches 50 et 54 sont séparées par la structure alvéolaire 52.

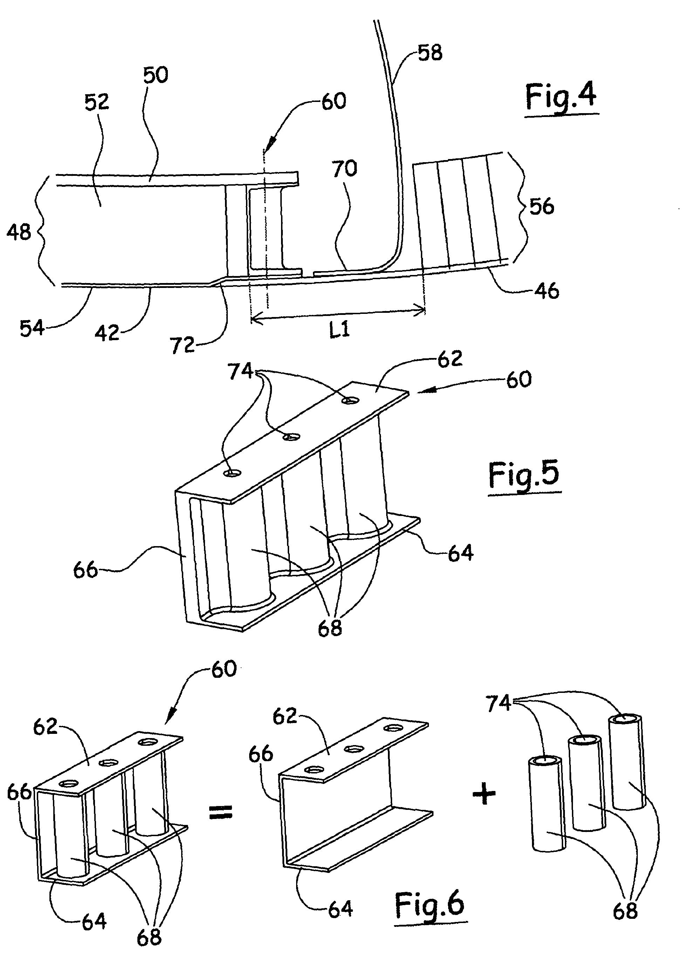

Avantageusement, au moins une entretoise 68 est prévue entre les parties 62 et 64 pour assurer la reprise des efforts en compression. Selon les variantes, ladite au moins une entretoise 68 est distincte du profilé, comme illustré sur la figure 6, ou réalisée d'un seul tenant avec le profilé comme illustré sur la figure 5.

Selon les variantes, le renfort 60 peut avoir une section fermée, par exemple avoir une section de forme rectangulaire creuse ou pleine ou une section de forme carrée creuse ou pleine, ou une section ouverte, par exemple avoir une section en forme de C.

En fonction de sa forme, le renfort 60 peut être métallique, en matériau composite ou en résine.

Selon l'invention, les dimensions de la ou des structure(s) alvéolaire(s) et éventuellement de la ou des structure(s) acoustiquement résistive(s) intercalaires sont ajustées pour permettre de loger le renfort 60 entre la couche réflectrice 50 et la structure acoustiquement résistive extérieure 54. Comme illustré sur la figure 4, le conduit 42 comprend un panneau pour le traitement acoustique dont la structure acoustiquement résistive 54 forme la surface aérodynamique dudit conduit 42.

Le panneau formant la lèvre 46 est solidarisé à un rebord 70 du cadre avant 58 et se prolonge au-delà dudit rebord 70 pour être chevauchant au panneau pour le traitement acoustique 48 formant le conduit 42. Le panneau formant la lèvre 46 est fixé contre la surface extérieure de la structure acoustiquement résistive 54 qui comprend un léger décrochement 72 pour loger ledit panneau formant la lèvre 46 afin que les surfaces extérieures de la lèvre 46 et du conduit 42 soient dans le prolongement l'une de l'autre de part et d'autre de cette zone de liaison.

Le renfort 60 est disposé au droit de la zone de chevauchement de la lèvre et du panneau acoustique ce qui permet de réduire la zone L1 non traitée sur la plan acoustique par rapport à l'art antérieur.

Selon un autre mode de réalisation, le renfort 60 peut avoir une section fermée et être disposé au niveau du bord du panneau acoustique recouvrant le conduit 42 et au niveau du bord du panneau acoustique recouvrant la lèvre 46, le cadre avant 58 étant solidarisé audit renfort.

Cette dernière version permet d'optimiser les surfaces traitées sur le plan acoustique.

Selon une autre caractéristique de l'invention, les entretoises 68 comprennent chacune un alésage 74 débouchant au niveau des surfaces de contact des parties 62 et 64 permettant le passage d'un moyen de fixation tel qu'une tige. Selon les cas, le renfort peut comprendre une rangée d'entretoises ou deux rangées d'entretoises notamment quand il a une section fermée et utilisée pour renforcer deux panneaux acoustiques mis bout à bout.

## Revendications

1. Panneau pour le traitement acoustique d'une entrée d'air d'une nacelle comprenant, de l'intérieur vers l'extérieur, une couche réflectrice (50), au moins une structure alvéolaire (52) et au moins une structure acoustiquement résistive (54) formant une surface aérodynamique, ledit panneau étant apte à être relié au niveau d'un bord à au moins un second panneau (46), et comprenant au niveau du bord chevauchant avec ledit au moins un second panneau, un renfort (60) intercalé entre la couche réflectrice (50) et la structure acoustiquement résistive (54) formant la surface aérodynamique, ledit renfort (60) assurant la reprise des efforts entre ladite couche (50) et ladite structure (54), **caractérisé en ce que**
ledit renfort (60) se présente sous la forme d'un profilé comprenant une première partie (62) offrant une surface de contact à la surface intérieure de la couche réflectrice (50) et une seconde partie (64) offrant une surface de contact à la surface intérieure de la structure acoustiquement résistive (54), et au moins une paroi (66) assurant la liaison et la reprise des efforts entre lesdites parties (62, 64), les surfaces de contact des parties (62) et (64) étant sensiblement parallèles et espacées d'une distance correspondant sensiblement à l'écart entre la couche réflectrice (50) et la structure acoustiquement résistive (54) lorsque lesdites couches (50 et 54) sont séparées par la structure alvéolaire (52).

2. Panneau pour le traitement acoustique selon la revendication 1, **caractérisé en ce que** le renfort (60) comprend au moins une entretoise (68) prévue entre les parties (62, 64) pour assurer la reprise des efforts en compression.

3. Panneau pour le traitement acoustique selon la revendication 2, **caractérisé en ce que** les entretoises (68) comprennent chacune un alésage (74) débouchant au niveau des surfaces de contact des parties (62, 64) permettant le passage de moyen de fixation.

4. Nacelle d'aéronef comprenant au moins un conduit (42) revêtu d'un panneau acoustique (48) avec, de l'intérieur vers l'extérieur, une couche réflectrice (50), au moins une structure alvéolaire (52) et au moins une structure acoustiquement résistive (54) formant la surface aérodynamique dudit conduit (42), une entrée d'air délimitée par un panneau formant une lèvre (46) dont une partie est fixée contre la surface extérieure de la structure acoustiquement résistive (54), le panneau acoustique comprenant, au niveau du bord chevauchant avec le panneau formant la lèvre (46), un renfort (60) intercalé entre la couche réflectrice (50) et la structure acoustiquement résistive (54) formant la surface aérodynamique, ledit renfort (60) assurant la reprise des efforts entre ladite couche (50) et ladite structure (54), **caractérisé en ce que**
ledit renfort (60) se présente sous la forme d'un profilé comprenant une première partie (62) offrant une surface de contact à la surface intérieure de la couche réf lectrice (50) et une seconde partie (64) offrant une surface de contact à la surface intérieure de la structure acoustiquement résistive (54), et au moins une paroi (66) assurant la liaison et la reprise des efforts entre lesdites parties (62, 64) les surfaces de contact des parties (62) et (64) étant sensiblement parallèles et espacées d'une distance correspondant sensiblement à l'écart entre la couche réflectrice (50) et la structure acoustiquement résistive (54) lorsque lesdites couches (50 et 54) sont séparées par la structure alvéolaire (52).

5. Nacelle d'aéronef selon la revendication 4, **caractérisée en ce que** le renfort (60) comprend au moins une entretoise (68) prévue entre les parties (62, 64) pour assurer la reprise des efforts en compression.

6. Nacelle d'aéronef selon la revendication 5, **caractérisée en ce que** les entretoises (68) comprennent chacune un alésage (74) débouchant au niveau des surfaces de contact des parties (62, 64) permettant le passage de moyen de fixation.

7. Nacelle d'aéronef selon l'une quelconque des revendications 4 à 6, **caractérisée en ce que** le panneau pour le traitement acoustique comprend un léger décrochement (72) pour loger le panneau formant la lèvre (46).

8. Nacelle d'aéronef selon l'une quelconque des revendications 4 à 7, **caractérisée en ce que** le renfort (60) a une section fermée et disposée au niveau du bord d'un panneau acoustique recouvrant le conduit (42) et au niveau du bord d'un panneau acoustique recouvrant la lèvre (46), un cadre avant (58) étant solidarisé audit renfort (60).

## Claims

1. Acoustic treatment panel of an air intake of a nacelle comprising, from the inside to the outside, a reflective layer (50), at least one alveolar structure (52), and at least one acoustically resistive structure (54) that forms an aerodynamic surface, whereby said panel is able to be connected at one edge to at least one second panel (46), and comprising at the edge overlapping with said at least one second panel, a reinforcement (60) that is inserted between the reflective layer (50) and the acoustically resistive structure (54) forming the aerodynamic surface, said reinforcement (60) ensuring the uptake of forces between the layer (50) and the structure (54), **characterized in that** said reinforcement (60) comes in the form of a section that comprises a first part (62) that offers a surface for contact with the inside surface of the reflective layer (50) and a second part (64) that offers a surface for contact with the inside surface of the acoustically resistive structure (54), and at least one wall (66) that ensures the connection and the uptake of forces between said parts (62, 64), the surfaces for contact of the parts (62) and (64) being substantially parallel and spaced by a distance substantially corresponding to the distance between the reflective layer (50) and the acoustically resistive structure (54) when said layers (50, 54) are spaced by the alveolar structure (52).

2. Acoustic treatment panel according the claim 1, wherein the reinforcement (60) comprises at least one crosspiece (68) that is provided between the parts (62, 64) for ensuring the uptake of compression forces.

3. Acoustic treatment panel according to claim 2, wherein the crosspieces (68) each comprise a bore (74) that empties at the contact surfaces of the parts (62, 64), making possible the passage of the attachment means.

4. Aircraft nacelle that comprises at least one pipe (42) that is coated with an acoustic panel (48) with, from the inside to the outside, a reflective layer (50), at least one alveolar structure (52), and at least one acoustically resistive structure (54) that forms the aerodynamic surface of said pipe (42), an air intake that is delimited by a panel that forms a lip (46) of which one part is secured against the outside surface of the acoustically resistive structure (54), the acoustic panel comprising, at the edge overlapping with the panel forming the lip (46), a reinforcement (60) that is inserted between the reflective layer (50) and the acoustically resistive structure (54) forming the aerodynamic surface, said reinforcement (60) ensuring the uptake of forces between the layer (50) and the structure (54), **characterized in that** said reinforcement (60) comes in the form of a section that comprises a first part (62) that offers a surface for contact with the inside surface of the reflective layer (50) and a second part (64) that offers a surface for contact with the inside surface of the acoustically resistive structure (54), and at least one wall (66) that ensures the connection and the uptake of forces between said parts (62, 64), the surfaces for contact of the parts (62) and (64) being substantially parallel and spaced by a distance substantially corresponding to the distance between the reflective layer (50) and the acoustically resistive structure (54) when said layers (50, 54) are spaced by the alveolar structure (52).

5. Aircraft nacelle according to claim 4, wherein the reinforcement (60) comprises at least one crosspiece (68) that is provided between the parts (62, 64) to ensure the uptake of compression forces.

6. Aircraft nacelle according to claim 5, wherein the crosspieces (68) each comprise a bore (74) that empties at the contact surfaces of the parts (62, 64), making possible the passage of the attachment means.

7. Aircraft nacelle according to any of claims 4 to 6, wherein the acoustic treatment panel comprises a slight offset (72) for housing the panel that forms the lip (46).

8. Aircraft nacelle according to any of claims 4 to 7, wherein the reinforcement (60) has a closed section and is arranged at the edge of an acoustic panel that covers the pipe (42) and at the edge of an acoustic panel that covers the lip (46), whereby a front frame (58) is made integral with said reinforcement (60).

## Patentansprüche

1. Paneel für den Schallschutz eines Lufteinlasses einer Gondel, umfassend - von innen nach außen - eine reflektierende Schicht (50), wenigstens eine Wabenstruktur (52) und wenigstens eine schallwiderstandsfähige Struktur (54), die eine aerodynamische Fläche bildet, wobei das Paneel geeignet ist, im Bereich einer Kante mit wenigstens einem zweiten Paneel (46) verbunden zu werden, und im Bereich der sich mit dem wenigstens einen zweiten Paneel überlappenden Kante eine Verstärkung (60) aufweist, die zwischen der reflektierenden Schicht (50) und der die aerodynamische Fläche bildenden schallwiderstandsfähigen Struktur (54) eingefügt ist, wobei die Verstärkung (60) die Aufnahme der Kräfte zwischen der Schicht (50) und der Struktur (54) sicherstellt, **dadurch gekennzeichnet, dass** die Verstärkung (60) in Form eines Profils vorliegt, das einen ersten Teil (62), der eine Kontaktfläche für die Innenseite der reflektierenden Schicht (50) bietet, und einen zweiten Teil (64), der eine Kontaktfläche für die Innenseite der schallwiderstandsfähigen Struktur (54) bietet, sowie wenigstens eine Wand (66) umfasst, welche die Verbindung und die Aufnahme der Kräfte zwischen den Teilen (62, 64) sicherstellt, wobei die Kontaktflächen der Teile (62) und (64) im Wesentlichen parallel verlaufen und um einen Abstand voneinander entfernt sind, der im Wesentlichen dem Abstand zwischen der reflektierenden Schicht (50) und der schallwiderstandsfähigen Struktur (54) entspricht, wenn die Schichten (50 und 54) durch die Wabenstruktur (52) getrennt sind.

2. Paneel für den Schallschutz nach Anspruch 1, **dadurch gekennzeichnet, dass** die Verstärkung (60) wenigstens einen Steg (68) umfasst, der zwischen den Teilen (62, 64) vorgesehen ist, um die Aufnahme der Druckkräfte sicherzustellen.

3. Paneel für den Schallschutz nach Anspruch 2, **dadurch gekennzeichnet, dass** die Stege (68) jeweils eine im Bereich der Kontaktflächen der Teile (62, 64) ausmündende Bohrung (74) aufweisen, die den Durchgang eines Befestigungsmittels ermöglicht.

4. Gondel eines Flugzeugs, umfassend wenigstens einen Kanal (42), der mit einem Schalldämmpaneel (48) mit - von innen nach außen - einer reflektierenden Schicht (50), wenigstens einer Wabenstruktur (52) und wenigstens einer schallwiderstandsfähigen Struktur (54), welche die aerodynamische Fläche des Kanals (42) bildet, verkleidet ist, einen Lufteinlass, der durch ein Paneel begrenzt ist, welches eine Lippe (46) bildet, von welcher ein Teil an der Außenseite der schallwiderstandsfähigen Struktur (54) befestigt ist, wobei das Schalldämmpaneel im Bereich der Kante, die mit dem die Lippe (46) bildenden Paneel überlappt, eine Verstärkung (60) aufweist, die zwischen der reflektierenden Schicht (50) und der die aerodynamische Fläche bildenden schallwiderstandsfähigen Struktur (54) eingefügt ist, wobei die Verstärkung (60) die Aufnahme der Kräfte zwischen der Schicht (50) und der Struktur (54) sicherstellt, **dadurch gekennzeichnet, dass** die Verstärkung (60) in Form eines Profils vorliegt, das einen ersten Teil (62), der eine Kontaktfläche für die Innenseite der reflektierenden Schicht (50) bietet, und einen zweiten Teil (64), der eine Kontaktfläche für die Innenseite der schallwiderstandsfähigen Struktur (54) bietet, sowie wenigstens eine Wand (66) umfasst, welche die Verbindung und die Aufnahme der Kräfte zwischen den Teilen (62, 64) sicherstellt, wobei die Kontaktflächen der Teile (62) und (64) im Wesentlichen parallel verlaufen und um einen Abstand voneinander entfernt sind, der im Wesentlichen dem Abstand zwischen der reflektierenden Schicht (50) und der schallwiderstandsfähigen Struktur (54) entspricht, wenn die Schichten (50 und 54) durch die Wabenstruktur (52) getrennt sind.

5. Gondel eines Flugzeugs nach Anspruch 4, **dadurch gekennzeichnet, dass** die Verstärkung (60) wenigstens einen Steg (68) umfasst, der zwischen den Teilen (62, 64) vorgesehen ist, um die Aufnahme der Druckkräfte sicherzustellen.

6. Gondel eines Flugzeugs nach Anspruch 5, **dadurch gekennzeichnet, dass** die Stege (68) jeweils eine im Bereich der Kontaktflächen der Teile (62, 64) ausmündende Bohrung (74) aufweisen, die den Durchgang eines Befestigungsmittels ermöglicht.

7. Gondel eines Flugzeugs nach einem der Ansprüche 4 bis 6, **dadurch gekennzeichnet, dass** das Paneel für den Schallschutz einen leichten Absatz (72) für die Aufnahme des die Lippe (46) bildenden Paneels aufweist.

8. Gondel eines Flugzeugs nach einem der Ansprüche 4 bis 7, **dadurch gekennzeichnet, dass** die Verstärkung (60) einen geschlossenen Querschnitt aufweist und im Bereich der Kante eines den Kanal (42) bedeckenden Schalldämmpaneels und im Bereich der Kante eines die Lippe (46) bedeckenden Schalldämmpaneels angeordnet ist, wobei ein vorderer Rahmen (58) mit der Verstärkung (60) fest verbunden ist.
